# EUROPEAN PATENT APPLICATION

(11) **EP 4 803 564 A1**
(43) Date of publication of application: **09.09.2026**
(21) Application number: 25173013.1
(22) Date of filing: 28.04.2025
(51) Int. Cl.: C08J 5/18, H01M 4/04, H01M 4/62, H01M 4/139, C08L 33/20

(54) **POLYMERIC BINDERS FOR PARTICLE-FILLED COMPOSITES**

(30) Priority: 04.03.2025 US 202563766818 P
(71) Applicant: W. L. Gore & Associates, Inc., Newark, DE 19711 (US)
(72) Inventor: HENDERSON, Joseph W., Newark, 19711 (US); KNOPF, Jeffrey A., Newark, 19711 (US); MINOR, Michael B., Newark, 19711 (US); VIDHATE, Shailesh P., Newark, 19711 (US)
(74) Representative: HGF

(57) **Abstract**

A method of manufacturing an article includes shearing filler particles and polyacrylonitrile (PAN) polymer particles to form a blended particle composition; and forming the blended particle composition into an article using solid state processing at a temperature above a glass transition temperature and below a melt temperature of the PAN polymer particles; wherein the PAN polymer particles comprise one or more of PAN, homopolymers of PAN, and copolymers of PAN.

## Description

### FIELD

The present disclosure relates generally to apparatuses, systems, materials, and methods for preparing and processing particle-filled composites and articles, for example, for use in energy storage and/or conversion, carbon capture, and chemical filtration or separation.

### BACKGROUND

Electrical energy storage and/or conversion is important in many applications, including mobile electronic devices, electric vehicles, and solar energy capture. As new applications in which electrical energy storage and/or conversion are used and as technologies are shifting toward use of electrical power, various factors have driven the development of electrochemical energy storage devices. For example, some considerations include the cost and efficiency of manufacturing electrochemical energy storage and/or conversion devices, the size and weight of electrochemical energy storage and/or conversion devices, the environmental impact of manufacturing and disposal of electrochemical energy devices, and the efficiency and durability of electrochemical energy storage and/or conversion devices over time. The dominant electrochemical energy storage and/or conversion technology for many applications is lithium-ion batteries.

The incumbent methodology used to produce most commercial lithium-ion battery electrodes, sometimes called the "wet process," involves the use of large quantities of liquid processing aids (e.g., solvents such as N-methyl-2-pyrrolidone (NMP)) that may be hazardous to people and/or the environment, as well as the use of large ovens to remove the liquid processing aids.

Accordingly, there is a need in the art for more efficient methods of composite production that have a decreased environmental impact and that are scalable for mass production of composites and articles that may be used in various settings and industries.

### SUMMARY

According to one aspect ("Aspect 1"), a method of manufacturing an article comprises: shearing filler particles and polyacrylonitrile (PAN) polymer particles to form a blended particle composition; and forming the blended particle composition into an article using solid state processing at a temperature above a glass transition temperature and below a melt temperature of the PAN polymer particles; wherein the PAN polymer particles comprise one or more of PAN, homopolymers of PAN, and copolymers of PAN.

Aspect 2 is the method of Aspect 1, wherein the PAN polymer particles have a crystallinity of at least 15% determined using an X-ray diffractometer prior to shearing and forming the blended particle composition into the article.

Aspect 3 is the method of Aspect 1, wherein the article comprises filler particles durably enmeshed within fibrils formed by the PAN polymer particles.

Aspect 4 is the method of any one of the preceding Aspects, wherein the PAN polymer particles have a molecular weight of at least 50,000 g/mol determined using inherent viscosity.

Aspect 5 is the method of Aspect 4, wherein the PAN polymer particles have a molecular weight of at least 100,000 g/mol determined using inherent viscosity.

Aspect 6 is the method of Aspect 1, wherein the PAN polymer particles comprises first PAN polymer particles having a first molecular weight of from 50,000 g/mol to 1,000,000 g/mol and second PAN polymer particles having a second molecular weight of at least 1,000,000 g/mol determined using inherent viscosity.

Aspect 7 is the method of any one of the preceding Aspects, wherein forming the blended particle composition into the article comprises one or more of applying pressure, calendering, extruding, applying heat, roll milling, or roll compacting the blended particle composition.

Aspect 8 is the method of any one of the preceding Aspects, wherein the article has a fibrillation percentage greater than 0% as determined using Scanning Electron Microscopy (SEM).

Aspect 9 is the method of any one of the preceding Aspects, wherein the filler particles comprise at least one of alumina particles, carbon particles, conductive carbon particles, activated carbon particles, zeolite, titanium dioxide (TiO₂), silica, silicon carbide, graphite particles, carbon black particles, silicon, sulfur, and lithium compound particles.

Aspect 10 is the method of any one of the preceding Aspects, wherein the blended particle composition comprises from 25 wt.% to 99 wt.% of the filler particles and from 1 wt.% to 75 wt.% of the PAN polymer particles.

Aspect 11 is the method of any one of the preceding Aspects, wherein the blended particle composition comprises from 75 wt.% to 99 wt.% of the filler particles and from 1 wt.% to 25 wt.% of the PAN polymer particles; wherein the filler particles comprise at least one of conductive carbon particles, graphite particles, silicon, and lithium compound particles; wherein the lithium compound particles comprise lithium titanate, lithium metal, Lithium Cobalt Oxide (LiCoO₂), Lithium Iron Phosphate (LiFePO₄), Lithium Manganese Oxide (LiMn₂O₄), Lithium Nickel Manganese Cobalt Oxide (NMC), Lithium Nickel Cobalt Aluminum Oxide (NCA), or Lithium Sulfide (Li₂S).

Aspect 12 is the method according to any one of the preceding Aspects, wherein the steps of shearing and forming are conducted substantially in the absence of a solvent, plasticizer, or lubricant.

Aspect 13 is the method according to any one of Aspects 1 through Aspect 11, wherein the shearing and/or forming steps are conducted using at least one lubricant.

Aspect 14 is the method according to any one of Aspects 1 through Aspect 11, wherein the shearing and/or forming steps are conducted using at least one plasticizer.

Aspect 15 is the method according to Aspect 14, wherein the plasticizer comprises a polar liquid.

Aspect 16 is the method according to Aspect 15, wherein the polar liquid comprises propylene carbonate or ethylene carbonate.

Aspect 17 is the method according to any one of Aspects 13 through Aspect 16, further comprising: drying the article to remove the lubricant or plasticizer.

Aspect 18 is the method according to any one of the preceding Aspects, wherein the article has a tensile stress at maximum load of from about 1,000 kPa to about 200,000 kPa.

Aspect 19 is the method according to any one of the preceding Aspects, wherein the article has a porosity of from about 5% to 90%.

Aspect 20 is the method according to any one of the preceding Aspects, wherein the copolymers of PAN are formed by polymerizing an acrylonitrile monomer and a second monomer selected the group consisting of methyl acrylate, methyl methacylate, vinyl acetate, styrene, acrylamide, methacrylonitrile, methacrylamide, vinyl chloride, halogenated styrenes, methyl vinyl ketone, vinyl pryrollidone, vinyl pyridines, acrylic or methacrylic acid, itaconic acid, ethylene and suphonic acids thereof.

According to one aspect ("Aspect 21"), an article comprises: filler particles and a binder system including fibrillated polyacrylonitrile (PAN) polymer particles comprising one or more of PAN, homopolymers of PAN, and copolymers of PAN, wherein the filler particles are durably enmeshed within fibrils formed by the fibrillated PAN polymer particles.

Aspect 22 is the article of Aspect 21, wherein the filler particles comprise at least one of alumina particles, carbon particles, conductive carbon particles, activated carbon particles, zeolite, titanium dioxide (TiO₂), silica, silicon carbide, graphite particles, carbon black particles, silicon, sulfur, and lithium compound particles.

Aspect 23 is the article of Aspects 21 or 22, wherein the PAN polymer particles have a molecular weight of at least about 50,000 g/mol determined using inherent viscosity.

Aspect 24 is the article of any one of Aspects 21 to 23, wherein the article is self-supporting.

According to one aspect ("Aspect 25"), an electrode comprises: filler particles and a binder system comprising fibrillated polyacrylonitrile (PAN) polymer particles comprising one or more of PAN, homopolymers of PAN, and copolymers of PAN, wherein the filler particles are durably enmeshed within fibrils formed by the fibrillated PAN polymer particles.

Aspect 26 is the electrode of Aspect 25, wherein the electrode comprises from 75 wt.% to 99 wt.% of the filler particles and from 1 wt.% to 25 wt. % of the PAN polymer particles; wherein the filler particles comprise at least one of conductive carbon particles, graphite particles, silicon, and lithium compound particles; wherein the lithium compound particles comprise lithium titanate, lithium metal, Lithium Cobalt Oxide (LiCoO₂), Lithium Iron Phosphate (LiFePO₄), Lithium Manganese Oxide (LiMn₂O₄), Lithium Nickel Manganese Cobalt Oxide (NMC), Lithium Nickel Cobalt Aluminum Oxide (NCA), or Lithium Sulfide (Li₂S).

Aspect 27 is the electrode of Aspects 25 or 26, wherein the electrode is self-supporting.

Aspect 28 is the electrode of any one of Aspects 25-27, wherein the electrode is formed on a conductive foil.

Aspect 29 is the electrode of any one of Aspects 25-28, wherein the electrode has a fibrillation percentage greater than 0% as determined using Scanning Electron Microscopy (SEM).

Aspect 30 is the electrode of Aspect 25, further comprising up to 50 wt.% of a lubricant.

According to one aspect ("Aspect 31"), a method of making an electrode comprises: providing polyacrylonitrile (PAN) polymer particles comprising one or more of PAN, homopolymers of PAN, and copolymers of PAN; providing filler particles comprising at least one of conductive carbon particles, graphite particles, silicon, and lithium compound particles; shearing the PAN polymer particles with the filler particles to produce a blended particle composition; and forming the blended particle composition into a composite sheet at a temperature above a glass transition temperature and below a melt temperature of the PAN polymer particles; wherein the filler particles are durably enmeshed in the fibrillated PAN polymer particles.

Aspect 32 is the method of Aspect 31, wherein the PAN polymer particles have a molecular weight of at least about 50,000 g/mol determined using inherent viscosity.

Aspect 33 is the method of Aspect 31, wherein the composite sheet comprises from 50 wt.% to 99 wt.% of the filler particles and from 1 wt.% to 50 wt. % of the fibrillatable PAN polymer particles.

Aspect 34 is the method of any one of Aspects 31-33, wherein the composite sheet has a thickness from about 10 microns to about 500 microns.

Aspect 35 is the method of any one of Aspects 31-34, wherein the article has a fibrillation percentage greater than 0% as determined using Scanning Electron Microscopy (SEM).

Aspect 36 is the method of any one of Aspects 31-35, further comprising: applying the composite sheet to an electrically conductive substrate.

Aspect 37 is the method of any one of Aspects 31-36, wherein forming the blended particle composition into the composite sheet comprises one or more of applying pressure, calendering, extruding, applying heat, roll milling, or roll compacting.

According to one aspect ("Aspect 38") is use of fibrillatable polyacrylontrile (PAN) polymer resin particles as a binder in making an electrode under solid state processing, the PAN polymer particles having a molecular weight of at least 50,000 g/mol determined using inherent viscosity and a crystallinity of at least 15% determined using an X-ray diffractometer.

### BRIEF DESCRIPTION OF THE DRAWINGS

The accompanying drawings are included to provide a further understanding of the disclosure and are incorporated in and constitute a part of this specification, illustrate embodiments, and together with the description serve to explain the principles of the disclosure. The figures are not necessarily drawn to scale but may be exaggerated to illustrate various aspects of the present disclosure, and in that regard, the figures should not be construed as limiting.
FIG. 1 is a scanning electron micrograph (SEM) of the surface of the porous fibrillated PAN composite sheet of Example 1 taken at 2,500x magnification, in accordance with embodiments disclosed herein.
FIG. 2 is a scanning electron micrograph (SEM) of the surface of the porous fibrillated PAN composite sheet of Example 2 taken at 6,500x magnification, in accordance with embodiments disclosed herein.
FIG. 3 is a scanning electron micrograph (SEM) of the surface of the porous fibrillated PAN composite sheet of Example 3 taken at 2,500x magnification, in accordance with embodiments disclosed herein.

### DETAILED DESCRIPTION

### Definitions and Terminology

This disclosure is not meant to be read in a restrictive manner. For example, the terminology used in the application should be read broadly in the context of the meaning those in the field would attribute such terminology.

With respect to terminology of inexactitude, the terms "about" and "approximately" may be used, interchangeably, to refer to a measurement that includes the stated measurement and that also includes any measurements that are reasonably close to the stated measurement. Measurements that are reasonably close to the stated measurement deviate from the stated measurement by a reasonably small amount as understood and readily ascertained by individuals having ordinary skill in the relevant arts. In the event it is determined that individuals having ordinary skill in the relevant arts would not readily ascertain values for such reasonably small differences, the terms "about" and "approximately" can be understood to mean plus or minus 10% of the stated value.

As used herein, the term "fibril" refers to the characteristic shapes of elements within the structure of a material. The structural characteristics of a fibril can be described as small fibers, generally with a width of 10 nm to 900 nm.

As used herein, the terms "fibrillizable" refers to the ability of forming fibrils in a polymer.

As used herein, the term "fibrillized" refers to the presence of fibrils in a polymer.

As used herein, the term "fibrillize" refers to the process of forming fibrils in polymers.

As used herein, the terms "fibrillatable", "fibrillate" and "fibrillation" refer to the ability of a polymer to form a fibril microstructure via solid state deformation. The fibril microstructure is capable of durably enmeshing other particles within the fibrils. The ability of a polymer to form a fibril microstructure under solid state deformation and the fibril microstructure being capable of durably enmeshing other particles within the fibrils may be characterized, for example, by using Scanning Electron Microscopy (SEM) images. A fibrillated polymer may have other particles durably enmeshed within the fibril microstructure of the fibrillated polymer, and thus the fibrillated polymer may be used to bind the other particles. The term "fibrillated", as used herein, is meant to denote a polymer that contains a fibril microstructure formed by solid state deformation.

As used herein, the term "fibrillating" refers to the process of forming fibrillated polymers by solid state deformation.

As used herein, the term "solvent" refers to a substance that dissolves a solute (e.g., a polymer), resulting in a solution. As described herein, when a solvent is used to dissolve a polymer, the solvent breaks down the crystal structure of the polymer. Common organic solvents such as N-methylpyrrolidone (NMP), alcohols, ketones, and mixtures of alkanes.

As used herein, the term "plasticizer" refers to a substance that is added to a material to make it softer and/or more flexible. For example, a plasticizer may be used with a polymer to improve the mobility of polymer chains in the crystalline and amorphous regions of a semicrystalline polymer, thus decreasing the polymer's glass transition temperature and melting point.

As used herein, the phrase "solid state processing" refers to a method for processing polymeric materials at temperatures above the polymer's glass transition point but below the polymer's melting point. The solid state process is carried out without use of a solvent. In some embodiments, the process may be carried out without use of a lubricant or a plasticizer. In some embodiments, the process may be carried out with a lubricant or a plasticizer that does not dissolve the polymer during the process.

As used herein, the term "solid state processable" is used to describe a polymer or copolymer that may form a fibril microstructure via solid state deformation when processed at a temperature below the crystalline melt temperature of the polymer or copolymer.

The incumbent methodology used to produce most commercial lithium-ion batteries is called the "wet process." As used herein, the term "wet process" refers to a process by which the materials to be coated (e.g., electrode constituents such as active materials, conductive carbons, and binders) are suspended or homogenized in a liquid processing aid including a solvent (e.g., N-methylpyrrolidone (NMP)), and the resulting mixture (sometimes called a slurry or paste) is then coated onto a substrate (e.g., a metal foil) via a thin-film liquid coating technique (e.g., slot-die coating), dried to substantially remove the liquid processing aid, and optionally calendered to a desired thickness. The materials to be coated, liquid processing aids, substrates, and thin-film liquid coating techniques listed in this paragraph are illustrative only and are not intended to limit the definition of "wet process."

As used herein, the terms "solvent-free process" and "solvent-free processing" refer to a process by which materials are formed into an article using methodologies that are substantially free of solvents. There are multiple "solvent-free" processes including, but not limited to, solvent-free powder spray, solvent-free hot pressing, solvent-free 3D printing, melt extrusion, and the solvent-free electrode process.

As used herein, the term "solvent-free electrode process" is meant to denote to a process in which the formation of an electrode includes applying shear forces to a blend of binder and filler particles such that fibrillatable particles fibrillate to bind the filler particles together. The resulting electrode may or may not be self-supporting and may optionally be calendered to a desired thickness and/or attached to a substrate such as a metal foil, all of which is considered within the purview of the disclosure.

As used herein, the term "PAN" refers to polyacrylonitrile.

As used herein, the terms "filler" and "filler particles" refer to functional particles other than binders. For example, filler particles may include materials with properties facilitating specific functions of an article when the filler particles are processed as part of the article. In a more specific example, filler particles processed to form an electrode may include electrically conductive materials and electrochemically active materials (e.g., lithium intercalation compounds).

As used herein, the terms "binder" and "binder particles" refer to particles and materials that have a primary purpose to constrain other materials and particles into a cohesive structure.

As used herein, the terms "polymeric binder" refers to polymer or copolymer materials for use as binders.

As used herein, the term "loading" refers to the percent of filler on a weight basis in a blend of filler and binder.

The terms "composition" and "mixture" may be used interchangeably herein.

The terms "resin particle" and "resin powder" may be used interchangeably herein.

### Description of Various Embodiments

Persons skilled in the art will readily appreciate that various aspects of the present disclosure can be realized by any number of methods and apparatuses configured to perform the intended functions.

Historically, a major impediment to the adoption of the solvent-free electrode process has been the limited selection of viable binders. The binder requirements for the solvent-free electrode process are significantly different from the wet process. For the wet process, binders form adhesive bonds between electrode constituents that "glue" them together, and typical binders include polyvinylidene fluoride (PVDF), carboxymethyl cellulose (CMC), and styrene butadiene rubber (SBR). This type of binder may be referred to as an adhesive binder. However, the solvent-free electrode process uses binders that form fibrils under the application of shear forces. Despite discussion of and speculation about other polymers being used as fibrillizable binders, in practice the solvent-free electrode process has relied upon the use of polytetrafluoroethylene (PTFE). This discrepancy is because having a polymer capable of producing fibrils is not a sufficient criterion to enable the solvent-free electrode process (e.g., incorporating the filler(s) into product). Based on the foregoing discussion, a distinction is made between "fibrillizable" binders and "fibrillatable" binders, with the latter being formed through solid state deformation. It is important to enable the solvent-free electrode process by durably enmeshing filler particles within the fibril microstructure of the binder formed during solid state deformation. This is because while other polymers may fibrillize under certain conditions, they will not fibrillate sufficiently to durably enmesh filler materials when subjected to the solvent-free electrode processes currently in use.

It is well known that PTFE will fibrillate simply from handling a PTFE resin at room temperature. Furthermore, PTFE is capable of substantial deformation in the solid state. PTFE's solid state deformation properties are relied upon in much of PTFE processing, including in the solvent-free electrode processes that are currently in use. In solvent-free electrode processes, PTFE resin may be added to the process and directly fibrillated in the solid state to durably enmesh filler particles.

While PTFE is a versatile polymer that is suitable for many applications, it has some limitations and may not be optimal for all cases. For example, PTFE is not fully stable in contact with lithium metal or at the strongly reducing conditions of a typical (i.e., graphite-based) lithium-ion anode. Also, the density of PTFE is about twice that of hydrocarbon-based binders, which may reduce gravimetric energy density. Also, PTFE also has a very low surface energy that may pose challenges to electrolyte wetting.

Because of these properties and characteristics of PTFE, there is an interest in identifying additional or alternative materials (e.g., non-Lithium reactive materials, lighter materials, and so forth) for use as binders that can fibrillate to durably enmesh filler particles in the solvent-free electrode process. A need exists for improving the electrochemical stability, temperature stability, mechanical integrity, electrical conductivity and/or chemical stability when using cathodes and/or anodes of lithium-ion batteries. In addition, alternative binder materials that improve ease of recycling (e.g., may be readily hydrolyzed or degraded without damaging the filler particles) are also of interest.

Although it is known in the art that some polymers are fibrillizable, fibrillization alone is not inherently capable of durably enmeshing filler particles with high strength. When others have speculated as to other potential fibrilizable binders other than PTFE that may be used in the solvent-free electrode process (e.g., as discussed in US Patent Publication No. 2005/0057888 to Mitchell, et al., published March 17, 2005, which discusses that other "potential fibrillizable binders include ultra-high molecular weight polypropylene, polyethylene, co-polymers, polymer blends and the like") they fail to appreciate how PTFE differs from other fibrillizable polymers. PTFE is a fibrillizable polymer that is fibrillatable, meaning capable of forming fibrils via solid state deformation. Fibrillatable binders are required to durably enmesh filler particles with high strength. Many other fibrillizable polymers are not fibrillatable, for example they may form fibrils predominantly via thermoplastic extrusion rather than by solid-state deformation.

In certain embodiments, the fibrillatable binders disclosed herein include polyacrylonitrile (PAN) polymeric resin with solid state mobility and/or a sufficient degree of polymerization that would allow for significant elongation in the process of forming fibrils.

The polyacrylonitrile (PAN) polymer, PAN homopolymers, and PAN copolymers for use as binders contemplated for application within the present disclosure may include elastomeric and thermoplastic materials, naturally occurring or synthetic materials, as well as biodegradable materials. According to some embodiments, the polymeric binders may include fibrillatable binder materials including PAN polymer, PAN homopolymers, and/or PAN copolymers. According to certain embodiments, the polymeric binders may be more stable than PTFE when in contact with lithium metal or at the strongly reducing conditions of a typical (i.e., graphite-based) lithium-ion anode. In some embodiments, the fibrillatable binder particles are sufficiently strong and stable to provide the structural qualities desired to maximize the ratio of filler particles to fibrillatable binder particles for a particular purpose (e.g., maximizing the filler loading or maximizing the strength of an article). In some embodiments, the polymeric binders disclosed herein do not include perfluoroalkyl or polyfluoroalkyl (PFAS) materials.

According to some embodiments, the fibrillatable binder materials include polyacrylonitrile (PAN) polymer particles having a molecular weight as determined using inherent viscosity of at least 50,000 g/mol. In some embodiments, the fibrillatable binder materials include polymer particles having a molecular weight of at least 50,000 g/mol, or at least 75,000 g/mol, or at least 100,000 g/mol, or at least 150,000 g/mol, or at least 200,000 g/mol, or at least 300,000 g/mol, or at least 400,000 g/mol, or at least 500,000 g/mol, or at least 750,000 g/mol, or at least about 1,000,000 g/mol, or at least about 1,500,000 g/mol.

In some embodiments, the fibrillatable binder materials include polyacrylonitrile (PAN) polymer particles having a molecular weight as determined using inherent viscosity of from about 50,000 g/mol to about 5,000,000 g/mol, or from about 75,000 g/mol to about 5,000,000 g/mol, or from about 100,000 g/mol to about 5,000,000 g/mol, or from about 200,000 g/mol to about 5,000,000 g/mol, or from about 300,000 g/mol to about 5,000,000 g/mol, or from about 400,000 g/mol to about 5,000,000 g/mol, or from about 500,000 g/mol to about 5,000,000 g/mol, or from about 600,000 g/mol to about 5,000,000 g/mol, or from about 700,000 g/mol to about 5,000,000 g/mol, or from about 800,000 g/mol to about 5,000,000 g/mol, or from about 900,000 g/mol to about 5,000,000 g/mol, or from about 1,000,000 g/mol to about 5,000,000 g/mol, or from about 1,100,000 g/mol to about 5,000,000 g/mol, or from about 1,200,000 g/mol to about 5,000,000 g/mol, or from about 1,300,000 g/mol to about 5,000,000 g/mol, or from about 1,400,000 g/mol to about 5,000,000 g/mol, or from about 1,500,000 g/mol to about 5,000,000 g/mol, or any other number encompassed within these endpoints.

In some embodiments, the fibrillatable binder materials include polyacrylonitrile (PAN) polymer particles having a molecular weight as determined using inherent viscosity of from about 50,000 g/mol to about 5,000,000 g/mol, of from about 50,000 g/mol to about 4,500,000 g/mol, of from about 50,000 g/mol to about 4,000,000 g/mol, of from about 50,000 g/mol to about 3,500,000 g/mol, of from about 50,000 g/mol to about 3,000,000 g/mol, of from about 50,000 g/mol to about 2,500,000 g/mol, of from about 50,000 g/mol to about 2,000,000 g/mol, or any other number encompassed within these endpoints.

In some embodiments, the crystallinity of the polymeric resins may be measured by an X-ray diffractometer (e.g., as described in the Test Method section herein), differential scanning calorimetry (DSC), infrared radiation (IR), Raman spectroscopy, Nuclear Magnetic Resonance (NMR) spectroscopy, X-ray crystallography (XRC) and/or other appropriate technique for measuring polymer crystallinity.

In some embodiments, the fibrillatable binder materials include polyacrylonitrile (PAN) polymeric resin having a crystallinity of about 15% or greater, about 20% or greater, about 25% or greater, about 30% or greater, about 35% or greater, about 40% or greater, about 45% or greater, about 50% or greater, about 55% or greater, about 60% or greater, or about 65% or greater. In some embodiments, the fibrillatable binder materials include polymeric resin having a crystallinity of between about 15% and about 99%, or between about 20% and about 95%, or any other number encompassed within these endpoints.

In some embodiments, the polymeric resin includes copolymer particles including polyacrylonitrile (PAN) polymer particles and at least one comonomer included in addition to the PAN polymer particles. Comonomers may be present in the copolymer in an amount from about 0.001 mol% to about 10 mol%, from about 0.01 mol% to about 5 mol%, from about 0.1 mol% to about 1 mol%, or any other amount encompassed within these endpoints. In certain embodiments, the polymer particles include comonomer in an amount less than about 10 mol%, or less than about 5 mol%, or less than about 1 mol% such that the crystallinity of the polymeric resin does not drop below a desired amount (e.g., 15% or higher). In certain embodiments, the copolymers of PAN are formed by polymerizing an acrylonitrile monomer and a second monomer selected the group consisting of methyl acrylate, methyl methacylate, vinyl acetate, styrene, acrylamide, methacrylonitrile, methacrylamide, vinyl chloride, halogenated styrenes, methyl vinyl ketone, vinyl pryrollidone, vinyl pyridines, acrylic or methacrylic acid, itaconic acid, ethylene and suphonic acids thereof.

In some embodiments, the polymeric resin includes a mixture of PAN polymer particles having different molecular weights determined using inherent viscosity. For example, the polymeric resin includes first PAN polymer particles having a first molecular weight of from 50,000 g/mol to 1,000,000 g/mol and second PAN polymer particles having a second molecular weight of at least 1,000,000 g/mol determined using inherent viscosity.

In some embodiments, the fibrillatable binder materials disclosed herein include polyacrylonitrile (PAN) polymers. In certain embodiments, the fibrillatable binder materials including PAN polymers may be solid state processable to form a fibril microstructure via solid state deformation when processed at a temperature below the melting point of PAN polymers. In some embodiments, the PAN polymers may be synthesized via emulsion polymerization.

In some embodiments, the disclosure herein relates to methods of forming articles including polymer particles, for example via a solvent-free electrode process. This disclosure further relates to a solvent-free electrode process that implements the polymer particles as a viable binder. In some embodiments, the polymeric binder particles disclosed herein are solid state processable polyacrylonitrile (PAN) polymer particles.

The specific characteristics of the polymer are discussed that facilitate the use of the polymers in solvent-free electrode processes. The polymeric binder particles as discussed herein have specific characteristics that make it possible to form fibrillated articles. The fibrillatable polymer particles discussed herein are compatible with solid state deformation processes, including those relating to solvent-free electrode processes (including but not limited to high-speed blending, milling, and calendering). More specifically, the polymeric binder particles and processes discussed herein fibrillate in solvent-free electrode processes, and the fibrillation is evidenced by Scanning Electron Microscopy (SEM) images.

Solvent-free processing, and particularly solvent-free electrode processing, of materials reduces material consumption, energy consumption, and environmental impact. The disclosed processes and materials provide increased strength of articles produced, thus facilitating increased loading of articles. In one example, the disclosed processes and materials facilitate the use of minimal polymer necessary to bind materials together via solvent-free electrode processing. Although specific examples of articles are provided herein, it is understood that any number of articles may be produced via the disclosed methods and compositions that may be implemented in various settings and industries. It is understood that the solvent-free processes discussed herein are intended to include those embodiments which are substantially solvent-free but may contain nominal amounts of solvent capable of dissolving the polymeric binder (e.g., less than 1 wt.%, less than 0.1 wt.%, less than 0.01 wt.% based on the total weight of the blended particle composition). In some embodiments, the solvent-free processes discussed herein is substantially solvent-free, but may include use of one or more other moisture or liquid that does not dissolve the polymeric binder (e.g., use of a plasticizer or lubricant).

The polyacrylonitrile (PAN) polymer particles as discussed herein may be implemented, for example, as a binder (for example, as part of a binder system) in various processes, including a solvent-free electrode process. The use of the polymer particles as a binder, as discussed herein, facilitates the production of articles having a variety of ranges of filler particle loadings, including the production of articles that are highly loaded.

The fibrillatable binder particles may include polyacrylonitrile (PAN) polymer particles having an average molecular weight (M_{V}) determined using inherent viscosity of at least 50,000 g/mol, or at least 75,000 g/mol, or at least 100,000 g/mol, or at least 300,000 g/mol, or at least 400,000 g/mol, or at least 500,000 g/mol, or at least 600,000 g/mol, or at least 700,000 g/mol, or at least about 1,000,000 g/mol, or at least about 2,000,000 g/mol, or at least about 3,000,000 g/mol, or at least about 4,000,000 g/mol, or at least about 5,000,000 g/mol, or at least about 10,000,000 g/mol. In some embodiments, the particles may have an average molecular weight in the range from about 50,000 g/mol to about 40,000,000 g/mol, or from about 75,000 g/mol to about 40,000,000 g/mol, or from about 100,000 g/mol to about 40,000,000 g/mol, or from about 200,000 g/mol to about 30,000,000 g/mol, or from about 400,000 g/mol to about 20,000,000 g/mol, or from about 500,000 g/mol to 19,000,000 g/mol, or from about 1,000,000 g/mol to 18,000,000 g/mol, or from about 2,000,000 g/mol to 17,000,000 g/mol, or from about 3,000,000 g/mol to 16,000,000 g/mol, or from about 4,000,000 g/mol to 15,000,000 g/mol, or from about 5,000,000 g/mol to 14,000,000 g/mol, or from about 6,000,000 g/mol to 13,000,000 g/mol, or may have an average molecular weight in the range of any other ranges encompassed by these endpoints.

In some embodiments, the polymer particles may be a homopolymer or copolymer of polyacrylonitrile (PAN) polymer particles. In some embodiments, the polymer particles may be provided in a polymer resin. The resin may include fibrillatable PAN polymer particles as described herein (e.g., having molecular weight of at least 50,000 g/mol and a crystallinity of at least 15%).

The fibrillatable binder particles including the PAN polymer particles may be blended with filler particles. The filler particles are selected to perform a certain function of the final product, including, but not limited to, conducting electrons, conducting ions, electrochemically reacting, and so forth. In some embodiments, the filler particles may be selected to conduct electricity and/or act as a reagent in energy storage and/or conversion devices (e.g., for use in an electrode). Fibrillatable binder particles are selected to bind the filler particles together. The fibrillatable binder particles are sufficiently strong and stable to provide the structural qualities desired to maximize the ratio of filler particles to fibrillatable binder particles for a particular purpose (e.g., maximizing the filler loading or maximizing the strength of an article). Multiple binders may be included in the blend (i.e., a "binder system"), and the binders may be of multiple types (e.g., a combination of fibrillatable binders and adhesive binders). In some embodiments, the filler particles may include organic particles, inorganic particles, and combinations thereof added to facilitating specific functions within a composite article (comprising the filler particles durably enmeshed with the present polymeric binders). In another embodiment, the filler particles may include, but are not limited to, electrically-conductive materials, electrochemically-active materials, thermally-conductive materials, catalytically-active materials (e.g., inorganic catalysts, enzymes, etc.), thermally-insulative materials, electronically-insulative materials, pigmented materials, opacifiers, reinforcement fibers, and the like.

In some embodiments, the filler particles may be selected for their various properties and characteristics. In some embodiments, the filler particles may be selected for conductivity or corrosion resistance. In some embodiments, the filler particles include at least one of alumina particles, carbon particles, conductive carbon particles, activated carbon particles, zeolite, titanium dioxide (TiO₂), silica, silicon carbide, graphite particles, carbon black particles, silicon, sulfur, and lithium compound particles. In certain embodiments, filler particles may be selected for conductivity for use in forming an electrode, including, for example, at least one of conductive carbon particles, graphite particles, silicon, and lithium compound particles. In some embodiments, the lithium compound particles include lithium titanate, lithium metal, Lithium Cobalt Oxide (LiCoO₂), Lithium Iron Phosphate (LiFePO₄), Lithium Manganese Oxide (LiMn₂O₄), Lithium Nickel Manganese Cobalt Oxide (NMC), Lithium Nickel Cobalt Aluminum Oxide (NCA), or Lithium Sulfide (Li₂S).

Some examples of filler particles that may be selected, either alone or in combination, include but are not limited to lithium cobalt oxide, lithium manganese oxide, lithium nickel manganese cobalt oxide (e.g., NMC-111, NMC-532, NMC-622, NMC-811), lithium nickel cobalt aluminum oxide, lithium iron phosphate, lithium manganese iron phosphate, and other lithium-ion battery cathode materials (collectively known as "lithium compound particles"); graphite, silicon, lithium titanate, and other lithium-ion battery anode materials; carbon black; solid electrolytes (e.g., Garnet-type, Perovskite-type, Sulfide-type, LiPON-type, Li₃N-type, polymer-type, LISICON, NASICON); activated carbon, hard carbon, carbon nanotubes, graphene, fullerenes, and other allotropes of carbon; sulfur; sodium transition metal oxides; nickel, iron, cobalt, alloys of the same, oxides and mixed oxides of the same, other transition metal compounds including both supported (e.g., on carbon or ceria) and unsupported versions. In some embodiments, any other materials that may be implemented as the filler particles include any other materials that may be implemented in lithium-ion battery cathodes, lithium-ion battery anodes, solid state batteries, alternative battery chemistries, supercapacitors, electrodes, and so forth.

Some examples of filler particles that may be included, either alone or in combination, include but are not limited to: sorbents, catalysts, metal oxides, silica, alumina, titania, metal organic frameworks, covalent organic frameworks, aerogels, carbon. In some embodiments, for example when the filler particles are selected from sorbents, catalysts, metal oxides, silica, alumina, titania, metal organic frameworks, covalent organic frameworks, aerogels, and carbon (e.g., carbon particles, conductive carbon particles, activated carbon particles, carbon black particles, graphite particles), the formed article may include from about 25 wt.% to about 99 wt.%, from about 30 wt.% to about 99 wt.%, from about 35 wt.% to about 99 wt.%, from about 40 wt.% to about 99 wt.%, from about 45 wt.% to about 99 wt.%, from about 50 wt.% to about 99 wt.%, from about 55 wt.% to about 99 wt.%, from about 60 wt.% to about 99 wt.%, from about 65 wt.% to about 99 wt.%, from about 70 wt.% to about 99 wt.%, from about 75 wt.% to about 99 wt.%, from about 80 wt.% to about 99 wt.%, from about 85 wt.% to about 99 wt.% of the filler particles described herein, or may have any value encompassed by the foregoing ranges.

In some embodiments, for example when filler particles are selected for use in an electrode for a solid state battery, the formed article may be a solid state battery electrode including from about 35 wt.% to about 60 wt.%, from about 40 wt.% to about 55 wt.%, or from about 45 wt.% to about 50 wt.% of the filler particles as described herein, or may have any value encompassed by the foregoing ranges.

In certain embodiments, for example when filler particles are selected for use in an electrode for a lithium ion battery, the formed article may be a lithium ion battery electrode including from about 80 wt.% to about 99 wt.%, from about 85 wt.% to about 98 wt.%, or from about 90 wt.% to about 95 wt.% of the filler particles as described herein, or may have any value encompassed by the foregoing ranges.

In some embodiments, for example when filler particles are selected for use other than electrodes (e.g., sorbents for use in filtration), the formed article may include from about 25 wt.% to about 45 wt.%, from about 25 wt.% to about 40 wt.%, from about 25 wt.% to about 35 wt.%, or from about 25 wt.% to about 30 wt.% of the filler particles as described herein, or may have any value encompassed by the foregoing ranges.

Turning to a discussion of the blended particle composition, the blended particle composition may include the filler particles and polymeric binder particles (e.g., PAN polymer particles, copolymers of PAN, homopolymers of PAN) as described above. In some embodiments, the blended particle composition includes less than 10% fibrillatable binder particles by weight. In some embodiments, the blended particle composition may include at least 25% by weight of filler particles and 75% or less by weight of fibrillatable binder particles. In some embodiments, the blended particle composition may include at least 50% by weight of filler particles and 50% or less by weight of fibrillatable binder particles. In some embodiments, the blended particle composition may include at least 75% by weight of filler particles and 25% or less by weight of fibrillatable binder particles.

In some embodiments, for example, the blended particle composition includes from 25 wt.% to 99 wt.% of the filler particles and from 1 wt.% to 75 wt.% of the PAN polymer particles, from 30 wt.% to 99 wt.% of the filler particles and from 1 wt.% to 70 wt.% of the PAN polymer particles, from 40 wt.% to 99 wt.% of the filler particles and from 1 wt.% to 60 wt.% of the PAN polymer particles, from 50 wt.% to 99 wt.% of the filler particles and from 1 wt.% to 50 wt.% of the PAN polymer particles, from 60 wt.% to 99 wt.% of the filler particles and from 1 wt.% to 40 wt.% of the PAN polymer particles, from 70 wt.% to 99 wt.% of the filler particles and from 1 wt.% to 30 wt.% of the PAN polymer particles, or from 75 wt.% to 99 wt.% of the filler particles and from 1 wt.% to 25 wt.% of the PAN polymer particles. In some embodiments, the ratio of filler particles and fibrillatable binder particles in the blended particle composition allows for an article formed of the blended particle composition to be self-supporting.

In some embodiments, the blended particle composition may include at least about 90%, about 91%, about 92%, about 93%, about 94%, about 95%, about 96%, about 97%, about 98%, or about 99% (or more) by weight of filler particles. In some embodiments, the blended particle composition may include about 10%, about 9%, about 8%, about 7%, about 6%, about 5%, about 4%, about 3%, about 2%, or about 1% or less by weight of fibrillatable binder particles. In some embodiments, articles formed of the blended particle composition may include about 5%, about 10%, about 15%, about 20%, about 25%, about 30%, about 35%, about 40%, about 45%, about 50%, about 55%, about 60%, about 65%, about 70%, about 75%, about 80%, or about 85% by weight filler particles with at least a portion of the remaining portion of the blended particle composition including the fibrillatable binder particles (e.g., about 95%, about 90%, about 85%, about 80%, about 75%, about 70%, about 65%, about 60%, about 55%, about 50%, about 45%, about 40%, about 35%, about 30%, about 25%, about 20%, or about 15% by weight). The article may be a sheet, a fiber, a tube, or a three-dimensional structure, and the article may be attached to a substrate (e.g., an article in sheet form may be bonded to a metal foil). Furthermore, the article may include articles formed by a powder application process whereby a blended mix of filler and binder particle is directly formed or bonded onto a substrate. That substrate could be, for example, a metal foil.

With reference to some specific embodiments, the blended particle composition may include at least about 90% by weight of the filler particles. In some embodiments, the high ratio of filler particles to binder particles facilitates the ability to substantially maintain the properties and characteristics of the filler particles for the entire blended particle composition (e.g., the properties and characteristics for which the filler particles are selected are not substantially diminished or diluted). It is understood that various ratios of filler and binder particles may be desirable in different applications. Particles described herein can be blended and calendered with the filler particles in a manner generally discussed in US Patent Publication No. 2005/0057888 to Mitchell, et al., published March 17, 2005, which yields composites with at least the properties (e.g., tensile stress and strain loads) shown in the examples discussed herein. By using the specific particles discussed herein, the composites yielded have sufficient filler particle content to perform the intended functions of the article produced from the blended particle composition as well as sufficient strength imparted by the fibrillated polymer particles.

When the polymeric particles as described herein are formed into an article via, e.g., solvent-free electrode processing, the particles include a fibril structure (e.g., substantially fibril structure) which provides certain characteristics to the article, for example, tensile strength (i.e., as demonstrated by tensile stress at maximum (max) load).

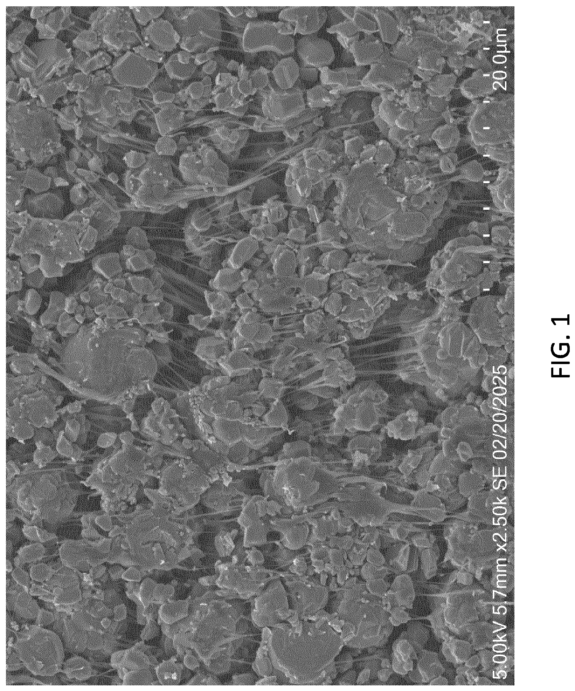

In some embodiments, when fibrillation of the polymer (according to the present disclosures) occurs during the solvent-free electrode process, the produced article may have formation of fibrillated polymer according to SEM images of the formed article. For example, as shown in FIGS. 1-3 corresponding to Examples 1-3 as described herein, formed articles each have varying degrees of fibrillation percentage as shown by the fibrils formed in each of the SEM images.

As described herein, articles produced using polymers with the characteristics described herein and subjected to the processes described herein demonstrate fibrillation as shown by a fibrillation percentage of the article being greater than 0%. In some embodiments, the articles produced according to the discussion herein include a fibrillation percentage of about 1% or greater, about 2% or greater, about 3% or greater, about 4% or greater, about 5% or greater, about 6% or greater, about 7% or greater, about 8% or greater, about 9% or greater, about 10% or greater, about 15% or greater, about 20% or greater, about 25% or greater, about 30% or greater, about 35% or greater, about 40% or greater, about 45% or greater, about 50% greater, about 55% or greater, about 60% or greater, about 65% or greater, about 75% or greater, about 80% or greater, about 85% or greater, about 90% or greater, about 95% or greater, or about 100%. In some embodiments, the articles produced according to the discussion herein may have a fibrillation percentage from about 20% to about 25%, from about 25% to about 30%, from about 30% to about 35%, from about 35% to about 40%, from about 40% to about 45%, from about 45% to about 50%, from about 50% to about 55%, from about 55% to about 60%, from about 60% to about 65%, from about 65% to about 70%, from about 70% to about 75%, from about 75% to about 80%, from about 80% to about 85%, from about 85% to about 90%, from about 90% to about 95%, or from about 95% to about 100%.

In one embodiment, the blended particle composition (e.g., the filler particles and the fibrillatable binder particles) may be implemented to form an article such as a three-dimensional structure or alternatively a sheet (e.g., a self-supporting sheet or a non-self-supporting sheet). In some embodiments, the blended particle composition can be applied directly to a secondary substrate (e.g., deposited, adhered, coupled, etc.). Some articles may be formed from the blended particle composition via a calendering process. Some embodiments include an article formed from a blended particle composition including at least 25% by weight of filler particles and 75% or less by weight of binder particles, or at least 50% by weight of filler particles and 50% or less by weight of binder particles, or at least 75% by weight of filler particles and 25% or less by weight of binder particles.

The blended particle composition may be prepared by processing the filler particles and the polymer particles under sufficient shear (e.g., in a manner generally discussed in US Patent Publication No. 2005/0057888 to Mitchell, et al., published March 17, 2005) in a first step. The blended particle composition may then be used to form various articles in a second step. For example, the blended particle composition may be formed into a composite sheet (e.g., self-supporting) of the filler particles durably enmeshed in the binder (e.g., fibrillated polymer particles) in a second step. In certain embodiments, the forming the blended particle composition into the article includes one or more of applying pressure, calendering, extruding, applying heat, roll milling, and roll compacting the blended particle composition. In some embodiments, for example, the formation of the article (e.g., composite sheet) may occur via a calendering process.

In some embodiments, the shearing step and the forming step are conducted substantially in the absence of a solvent, plasticizer, or lubricant. In certain embodiments, the shearing and/or forming steps are conducted using at least one lubricant. In some embodiments, the shearing and/or forming steps are conducted using at least one plasticizer. The plasticizer may include a polar liquid that does not dissolve the polymeric binder in the blended particle composition at a specific temperature (e.g., propylene carbonate is a solvent for PAN above 130°C and a plasticizer for PAN below 130°C). In certain embodiments, the plasticizer includes propylene carbonate, ethylene carbonate, gamma butyrolactone, or glycerol. In some embodiments, the formed article may be subsequently dried to remove the lubricant and/or plasticizer to form an article substantially free of liquid. Some potential plasticizers include propylene carbonate, ethylene carbonate, gamma butyrolactone, and glycerol (all of these have been mentioned specifically in literature as plasticizers for PAN).

In certain embodiments, the lubricant and/or plasticizer used during the shearing or forming step may be kept in the formed article and used as an electrolyte, for example, when the article is an electrode. In some embodiments, the formed article is an electrode including filler particles and a binder system including fibrillated polyacrylonitrile (PAN) polymer particles (e.g., PAN, homopolymers of PAN, and/or copolymers of PAN), with the filler particles are durably enmeshed within fibrils formed by the fibrillated PAN polymer particles. The electrode may include from 75 wt.% to 99 wt.% of the filler particles and from 1 wt.% to 25 wt.% of the PAN polymer particles. In some embodiments, the electrode may optionally include up to about 5 wt.%, or 10 wt.%, or 15 wt.%, or 20 wt.%, or 25wt.%, or 30 wt.%, or 35 wt. %, or 40 wt. %, or 45 wt. %, or 50 wt.% of a lubricant. The filler particles included in an electrode may be at least one of conductive carbon particles, graphite particles, silicon, and lithium compound particles (e.g., lithium titanate, lithium metal, Lithium Cobalt Oxide (LiCoO₂), Lithium Iron Phosphate (LiFePO₄), Lithium Manganese Oxide (LiMn₂O₄), Lithium Nickel Manganese Cobalt Oxide (NMC), Lithium Nickel Cobalt Aluminum Oxide (NCA), or Lithium Sulfide (Li₂S)). In certain embodiments, the electrode is self-supporting. In certain embodiments, the electrode is formed on a conductive foil.

In some embodiments, the formed article is a composite sheet. The composite sheet may have a thickness of about 10 microns (i.e., 0.01 mm) or greater (e.g., from about 10 microns to about 500 microns, from about 10 microns to about 20 microns, from about 20 microns to about 30 microns, from about 30 microns to about 40 microns, from about 40 microns to about 50 microns, from about 50 microns to about 60 microns, from about 60 microns to about 70 microns, from about 70 microns to about 80 microns, from about 80 microns to about 90 microns, from about 90 microns to about 100 microns, from about 100 microns to about 120 microns, from about 120 microns to about 140 microns, from about 140 microns to about 160 microns, from about 160 microns to about 180 microns, from about 180 microns to about 200 microns, from about 200 microns to about 250 microns, from about 250 microns to about 300 microns, from about 300 microns to about 350 microns, from about 350 microns to about 400 microns, from about 400 microns to about 450 microns, or about 450 microns to about 500 microns, or about 500 microns to about 550 microns, or about 550 microns to about 600 microns).

In some embodiments, the formed article (e.g., a composite sheet) has a tensile stress at maximum (max) load of from about 1,000 kPa (i.e., 1 MPa) to about 200,000 kPa (i.e., 200 MPa), from about 2,500 kPa (i.e., 2.5 MPa) to about 100,000 kPa (i.e., 1,000 MPa), from about 5,000 kPa to about 50,000 kPa, from about 6,000 kPa to about 40,000 kPa, from about 7,000 kPa to about 30,000 kPa, from about 8,000 kPa to about 20,000 kPa, from about 9,000 kPa to about 15,500 kPa, or from about 10,500 kPa to about 12,000 kPa, or may have any value encompassed by the foregoing ranges.

In some embodiments, the formed article (e.g., a composite sheet) has a tensile strain at maximum (max) load from about 5.0% to about 40.0%, for example, from about 5.0% to about 10.0%, from about 10.0% to about 15.0%, from about 15.0% to about 20.0%, from about 20.0% to about 25.0%, from about 25.0% to about 30.0%, from about 30.0% to about 35.0%, or from about 35.0% to about 40.0%, or may have any value encompassed by the foregoing ranges.

In some embodiments, the formed article (e.g., a composite sheet) has a flexural stress at maximum (max) load from about 5,000 kPa (i.e., 5 MPa) to about 100,000 kPa (i.e., 1,000 MPa), for example, from about 5,000 kPa to about 10,000 kPa, from about 10,000 kPa to about 15,000 kPa, from about 15,000 kPa to about 20,000 kPa, from about 20,000 kPa to about 25,000 kPa, from about 25,000 kPa to about 30,000 kPa, from about 30,000 kPa to about 35,000 kPa, from about 35,000 kPa to about 40,000 kPa, from about 40,000 kPa to about 45,000 kPa, from about 45,000 kPa to about 50,000 kPa, from about 50,000 kPa to about 60,000 kPa, from about 60,000 kPa to about 70,000 kPa, from about 70,000 kPa to about 80,000 kPa, from about 80,000 kPa to about 90,000 kPa, from about 90,000 kPa to about 100,000 kPa, or may have any value encompassed by the foregoing ranges.

In some embodiments, the formed article (e.g., a composite sheet) has a flexural strain at maximum (max) load from about 0.5% to about 5.0%, for example, from about 0.6% to about 5.0%, from about 0.6% to about 4.5%, from about 0.6% to about 4.0%, from about 0.7% to about 3.9%, from about 0.8% to about 3.8%, from about 0.9% to about 3.7%, or may have any value encompassed by the foregoing ranges.

In some embodiments, the formed article (e.g., a composite sheet) is porous, and having a porosity of from about 5% to about 90%, for example, from about 5% to about 10%, or from about 10% to about 15%, or from about 15% to about 20%, or from about 20% to about 25%, or from about 25% to about 30%, or from about 30% to about 35%, or from about 35% to about 40%, or from about 40% to about 45%, or from about 45% to about 50%, or from about 50% to about 55%, or from about 55% to about 65%, or from about 65% to about 70%,or from about 70% to about 80%, or from about 80% to about 90%, or may have any value encompassed by the foregoing ranges.

Various other articles (e.g., films, sheets, tapes, etc.) may be formed from the blended particle composition including filler particles durably enmeshed within fibrils formed by fibrillated polyacrylonitrile (PAN) polymer particles (e.g., PAN, homopolymers of PAN, and copolymers of PAN), and those articles may be implemented in various settings. In certain embodiments, these formed articles are self-supporting. In some embodiments, the articles produced from the blended particle composition may be applied to another substrate. In one embodiment, the articles produced from the blended particle composition may be applied to a substrate (e.g., an electrically conductive substrate). In some embodiments, the electrically conductive substrate is a conductive foil. The articles formed from the blended particle composition, either alone or in combination with other components (e.g., electrically conductive substrates, separators or spacers in batteries, and so forth), may be then used in various settings, such as an electrode article. The articles formed from the blended particle composition and optionally substrates onto which the articles are applied may be used to form an anode and/or a cathode. When the article is applied to a substrate, the article and substrate may include an adhesive.

In some embodiments, an electrode may include a composite sheet (or film) formed from filler particles (e.g., the filler particles discussed herein) and fibrillatable polymer particles (e.g., the PAN polymer particles discussed herein). The composite sheet (in some embodiments, a self-supporting sheet or alternatively a composite sheet formed on a support substrate, e.g., via direct deposition) may have a thickness from about 10 microns to about 600 microns or greater. A method of making the electrode may include fibrillating PAN polymer particles having a molecular weight of at least 50,000 g/mol and a crystallinity of at least 15% including blending (e.g., shearing) the particles with filler particles selected from at least one of carbon particles, conductive carbon particles, activated carbon particles, graphite, carbon black, silicon, sulfur, and lithium compound particles (or any other additional filler particles, including those listed herein) to produce a blended product, and forming the blended product into a composite sheet (e.g., a self-supporting or non-self-supporting composite sheet) of the filler particles durably enmeshed in fibrillated polymer in a substantially solvent-free process, where the composite sheet is at least 25% by weight of the filler particles and has a thickness from about 10 microns to about 600 microns.

The electrodes discussed herein may be implemented in an electrochemical energy storage and/or conversion device, the electrochemical energy storage and/or conversion device including at least a housing, an anode, a cathode, and an electrolyte (e.g., nonaqueous electrolyte), and in some embodiments a separator. The anode is positioned within the housing and may include a composite sheet formed of at least 90% by weight filler particles and 10% or less by weight binder particles. The filler particles and binder particles may be those discussed herein. In some embodiments, the anode binder particles may be fibrillated polymer particles having a molecular weight of at least 50,000 g/mol and a crystallinity of at least 15% as discussed herein, prior to submitting to the solvent-free electrode process.

A cathode is also positioned within the housing and may include a composite sheet formed of at least 90% by weight filler particles and 10% or less by weight binder particles. The cathode may be formed of filler and binder particles as discussed herein. In some embodiments, the cathode binder particles may be fibrillated particles having a molecular weight of at least 50,000 g/mol and a crystallinity of at least 15%. Specific examples of electrodes are provided in the example section herein. The anode and/or the cathode may be coupled (e.g., adhered, deposited on, or otherwise applied) to a secondary substrate (e.g., an electrically conductive element).

The electrodes discussed herein may be implemented on various types of electrochemical energy storage and/or conversion devices (e.g., batteries), including but not limited to lithium-ion batteries, lithium-sulfur batteries, sodium-ion batteries, and so forth. Although the examples included hereafter refer to half-cells (i.e., the cells using a lithium metal electrode in combination with one of the lithium-ion anodes or lithium-ion cathodes disclosed herein), it is understood that full cells may be formed using the electrodes disclosed herein as the anode, the cathode, or both.

### TEST METHODS

It is to be understood that although certain methods and equipment are described below, other methods or equipment determined suitable by one of ordinary skill in the art may be alternatively utilized.

### Molecular Weight Measurement

Inherent viscosity (ηᵢₙₕ) of a 0.1 g/mL polyacrylonitrile and dimethylformamide solution was measured using a size 75 Cannon-Fenske Routine Viscometer at 25 °C. The relationship between the viscosity-average molecular weight (M_{w}) and ηᵢₙₕ has been determined by Peebles (Peebles, L. H. "Polyacrylonitrile prepared in ethylene carbonate solution. III. Molecular parameters." Journal of Polymer Science: Part A, vol. 3, 1965, pp. 361-368) and the Mark-Houwink-Sakurada parameters used in the Molecular Weight Equation below, and were used to estimate the molecular weight (M_{w}). By using this equation, the estimated M_{w} for polyacrylonitrile (PAN) resins were measured.
${η}_{inh} = 6.98 \times 10 - 4 \left({M}_{v}0.645\right)$

### Mass Per Area

Samples were cut to a well-defined 12 mm (transverse direction) x 60 mm (machine direction) geometric area using a Universal Laser Systems laser cutter. Mass was measured using a laboratory analytical balance. Mass per area was calculated by dividing the mass by the geometric area.

### Thickness Measurement

Thickness was measured using a hand actuated Mitutoyo digital thickness gauge (Mitutoyo Corporation, Kawasaki, Japan) with 6.3 mm metal plates. Three individual thickness measurements were taken across the length of the sample to calculate an average thickness.

### Bulk Density

Bulk density was calculated by dividing the mass per area by the average thickness.

### Porosity

Porosity was calculated according to the following formula: $Φ = 1 - ρ \left(\frac{{W}_{p}}{{ρ}_{p}}+\frac{{W}_{f}}{{ρ}_{f}}\right)$
where Φ is porosity, ρ is bulk density, ρₚ is the polymer true density, which is taken to be 1.184 g/cm³ for PAN homopolymer and copolymers, W_{f} is the filler weight fraction, and ρ_{f} is the filler true density, which is taken to be 5.049 g/cm³ for MSE PRO Lithium Cobalt Oxide Cathode Powder (SKU: PO0129), and 3.185 g/cm³ for Inframat Advanced Materials Gamma Alumina Powder (Product #: 26R-0842UPGG). The true density of the fillers was measured using a helium pycnometer.

### Tensile Strength

Unless otherwise specified, tensile strength described herein is reported as an engineering stress (i.e., force normalized by the initial cross-sectional area of the sample). Tensile strength of the tape samples were measured in the machine direction using an Instron tensile tester. The tensile specimens were rectangular shaped with a length of 60 mm and width of 12 mm. The gauge length was 25.4 mm and the crosshead speed was 2.54 mm/min. Rubber grips were used.

### Flexural Properties

Flexural properties of the tapes were measured in the machine direction using an Instron tester equipped with a three-point bend test fixture in accordance with ASTM D790-17. The flexural specimens were rectangular shaped with a length of 60 mm and width of 12 mm.

### Dynamic Mechanical Analysis (DMA)

The storage modulus, elastic modulus, and tan δ were measured using DMA (Q800 DMA, TA Instruments, New Castle, Delaware, USA) for PAN resin powders and flat sheet composite samples. Powders were measured using a powder clamp from 25 to 300 °C at a ramp rate of 3 °C/min, a frequency of 1 Hz, and a strain of 0.01%. Flat sheet samples were measured using a 3 point bend clamp from 25 to 250 °C at a ramp rate of 3°C/min, a frequency of 1 Hz, and a strain of 0.05%.

### Crystallinity

Poly(acrylonitrile) (PAN) resins with varying molecular weights (MW) from three different sources were selected for this work. The primary objective was to establish a baseline for percentage crystallinity, which will serve as a reference for comparison after subsequent processing steps. The % Crystallinity was measured using Bruker D8 X-Ray Diffractometer.

Estimated crystal fraction from the ratio of crystalline peak area was fitted to total area to ensure precise measurement of the crystallinity of PAN resins, providing a reliable baseline for future comparisons. The non-linear curve-fitting feature of Origin Lab's Origin2024 software was used to calculate the crystallinity. A multi-peak fit using Pseudo-Voigt peak shapes was applied to de-convolute the amorphous peaks from the crystalline peaks. The crystal fraction is the ratio of the sum of the crystal peak areas to the total peak area. $% Crystallinity = \frac{A 1 + A 2 + A 3 + ⋯ .}{Total Area} \times 100$
Where A1, A2, A3 are crystal peaks areas.

### EXAMPLES

### Example 1

20 g of PAN particles (viscosity average molecular weight = 1,846,603 g/mol) and 80 g of lithium cobalt oxide particles (PO0129 lithium cobalt oxide, MSE Supplies LLC, Tucson, Arizona, USA) were blended were blended with shear mixing in a manner generally taught in U.S. Patent Publication No. 2005/0057888 to Mitchell, et al., published March 17, 2005. The mixture was formed into a sheet using a calendering machine equipped with steel rolls set to a temperature of 200°C.

The resulting freestanding, porous fibrillated PAN composite sheet contained the fillers durably enmeshed within the PAN fibrillated microstructure. A scanning electron micrograph (SEM) of the surface of the composite sheet taken at 2,500x magnification is shown in FIG. 1. This composite sheet was designated as Sample 1. Table 1 sets forth properties of the composite sheet Sample 1.

### Example 2

80 g of PAN particles (viscosity average molecular weight = 1,667,387 g/mol) and 320 g of gamma alumina particles (26R-0804UPG, Inframat Corporation, Manchester, Connecticut, USA) were blended with shear mixing in a manner generally taught in U.S. Patent Publication No. 2005/0057888 to Mitchell, et al., published March 17, 2005. The mixture was formed into a sheet using a calendering machine equipped with steel rolls set to a temperature of 200°C. The resulting freestanding, porous fibrillated PAN composite sheet contained the fillers durably enmeshed within the PAN fibrillated microstructure.

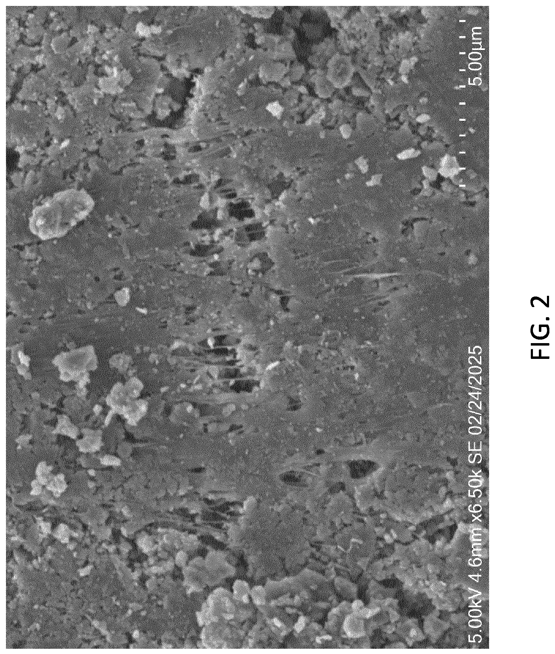

A scanning electron micrograph (SEM) of the surface of the composite sheet taken at 6,500x magnification is shown in FIG. 2. This composite sheet was designated as Sample 2. Table 1 sets forth properties of the composite sheet Sample 2.

### Example 3

20 g of PAN particles (viscosity average molecular weight = 1,764,222 g/mol, crystallinity = 42.3%), 80 g of lithium cobalt oxide particles (PO0129 lithium cobalt oxide, MSE Supplies LLC, Tucson, Arizona, USA), and 50 mL of propylene carbonate per 100 g of dry solids were blended with shear mixing in a manner generally taught in U.S. Patent Publication No. 2005/0057888 to Mitchell, et al., published March 17, 2005. The mixture was formed into a sheet using a calendering machine equipped with steel rolls set to a temperature of 80°C.

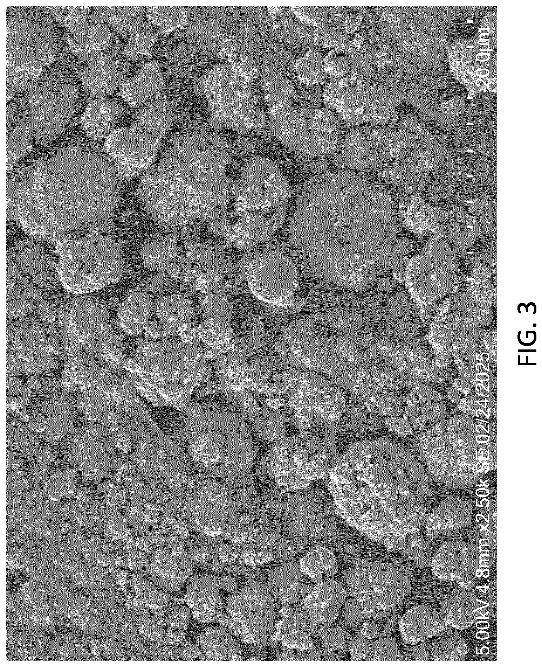

The resulting freestanding, porous fibrillated PAN composite sheet included the above fillers durably enmeshed within the PAN fibrillated microstructure. A scanning electron micrograph (SEM) of the surface of the composite sheet taken at 2,500x magnification is shown in FIG. 3. This composite sheet was designated as Sample 3. Table 1 sets forth properties of the composite sheet Sample 3.

### Example 4

120 g of polymeric particles having 96.3 mol% of PAN and 3.7 mol% of methyl acrylate (viscosity average molecular weight = 103,117 g/mol, crystallinity = 17.6%) and 480 g of lithium cobalt oxide particles (PO0129 lithium cobalt oxide, MSE Supplies LLC, Tucson, Arizona, USA) were blended with shear mixing in a manner generally taught in U.S. Patent Publication No. 2005/0057888 to Mitchell, et al., published March 17, 2005. The mixture was formed into a sheet using a calendering machine equipped with steel rolls set to a temperature of 160°C.

The resulting freestanding, porous fibrillated PAN composite sheet contained the fillers durably enmeshed within the PAN fibrillated microstructure. This composite sheet was designated as Sample 4. Table 1 sets forth properties of the composite sheet Sample 4.

### Example 5

120 g of PAN particles (viscosity average molecular weight = 1,892,917 g/mol) and 480 g of lithium cobalt oxide particles (PO0129 lithium cobalt oxide, MSE Supplies LLC, Tucson, Arizona, USA) were blended with shear mixing in a manner generally taught in U.S. Patent Publication No. 2005/0057888 to Mitchell, et al., published March 17, 2005. The mixture was formed into a sheet using a calendering machine equipped with steel rolls set to a temperature of 200°C.

The resulting freestanding, porous fibrillated PAN composite sheet contained the fillers durably enmeshed within the PAN fibrillated microstructure. This composite sheet was designated as Sample 5. Table 1 sets forth properties of the composite sheet Sample 5.

### Example 6

120 g of PAN particles (crystallinity = 39.7%) and 480 g of lithium cobalt oxide particles (PO0129 lithium cobalt oxide, MSE Supplies LLC, Tucson, Arizona, USA) were blended with shear mixing in a manner generally taught in U.S. Patent Publication No. 2005/0057888 to Mitchell, et al., published March 17, 2005. The mixture was formed into a sheet using a calendering machine equipped with steel rolls set to a temperature of 180°C.

The resulting freestanding, porous fibrillated PAN composite sheet contained the fillers durably enmeshed within the PAN fibrillated microstructure. This composite sheet was designated as Sample 6. Table 1 sets forth properties of the composite sheet Sample 6.

**Table 1 - Properties of composite sheet samples from Examples 1-6**

| Sample | Thickness , mm | Tensile Stress at Max Load, MPa | Tensile Strain at Max Load, % | Flexural Stress at Max Load, MPa | Flexural Strain at Max Load, % | Porosity , % |
|---|---|---|---|---|---|---|
| 1 | 0.53 | 36.58 | 32.4 | 96.24 | 2.62 | 20.29 |
| 2 | 0.59 | 14.51 | 16.9 | 29.74 | 1.67 | 46.48 |
| 3 | 0.32 | 3.63 | 10.2 | 9.34 | 3.75 | 53.65 |
| 4 | 0.56 | 63.40 | 30.7 | 137.54 | 1.34 | 11.08 |
| 5 | 0.46 | 80.83 | 34.1 | 195.03 | 2.12 | 10.61 |
| 6 | 0.30 | 43.91 | 13.0 | 91.54 | 0.91 | 17.03 |

The invention of this application has been described above both generically and with regard to specific embodiments. It will be apparent to those skilled in the art that various modifications and variations can be made in the embodiments without departing from the scope of the disclosure. Thus, it is intended that the embodiments cover the modifications and variations of this invention provided they come within the scope of the appended claims and their equivalents.

## Claims

1. A method of manufacturing an article comprising:
shearing filler particles and polyacrylonitrile (PAN) polymer particles to form a blended particle composition; and
forming the blended particle composition into an article using solid state processing at a temperature above a glass transition temperature and below a melt temperature of the PAN polymer particles;
wherein the PAN polymer particles comprise one or more of PAN, homopolymers of PAN, and copolymers of PAN.

2. The method of claim 1, the method further comprising one of the following features:
- the PAN polymer particles have a crystallinity of at least 15% determined using an X-ray diffractometer prior to shearing and forming the blended particle composition into the article; or
- the article comprises filler particles durably enmeshed within fibrils formed by the PAN polymer particles;

3. The method of any one of claim 1 or claim 2, wherein the PAN polymer particles have a molecular weight of at least 50,000 g/mol determined using inherent viscosity.

4. The method of claim 3, wherein the PAN polymer particles have a molecular weight of at least 100,000 g/mol determined using inherent viscosity.

5. The method of claim 1, the method further comprising one or more of the further features:
- the PAN polymer particles comprises first PAN polymer particles having a first molecular weight of from 50,000 g/mol to 1,000,000 g/mol and second PAN polymer particles having a second molecular weight of at least 1,000,000 g/mol determined using inherent viscosity;
- forming the blended particle composition into the article comprises one or more of applying pressure, calendering, extruding, applying heat, roll milling, or roll compacting the blended particle composition;
- the article has a fibrillation percentage greater than 0% as determined using Scanning Electron Microscopy (SEM);
- the filler particles comprise at least one of alumina particles, carbon particles, conductive carbon particles, activated carbon particles, zeolite, titanium dioxide (TiO₂), silica, silicon carbide, graphite particles, carbon black particles, silicon, sulfur, and lithium compound particles;
- the blended particle composition comprises from 25 wt.% to 99 wt.% of the filler particles and from 1 wt.% to 75 wt.% of the PAN polymer particles;
- the blended particle composition comprises from 75 wt.% to 99 wt.% of the filler particles and from 1 wt.% to 25 wt.% of the PAN polymer particles;
wherein the filler particles comprise at least one of conductive carbon particles, graphite particles, silicon, and lithium compound particles;
wherein the lithium compound particles comprise lithium titanate, lithium metal, Lithium Cobalt Oxide (LiCoO₂), Lithium Iron Phosphate (LiFePO₄), Lithium Manganese Oxide (LiMn₂O₄), Lithium Nickel Manganese Cobalt Oxide (NMC), Lithium Nickel Cobalt Aluminum Oxide (NCA), or Lithium Sulfide (Li₂S);
the article has a tensile stress at maximum load of from about 1,000 kPa to about 200,000 kPa;
- the article has a porosity of from about 5% to 90%; or
- the copolymers of PAN are formed by polymerizing an acrylonitrile monomer and a second monomer selected the group consisting of methyl acrylate, methyl methacylate, vinyl acetate, styrene, acrylamide, methacrylonitrile, methacrylamide, vinyl chloride, halogenated styrenes, methyl vinyl ketone, vinyl pryrollidone, vinyl pyridines, acrylic or methacrylic acid, itaconic acid, ethylene and suphonic acids thereof.

6. The method according to any one of the preceding claims, wherein the steps of shearing and forming are conducted substantially in the absence of a solvent, plasticizer, or lubricant.

7. The method according to any one of claims 1 through claim 5, wherein the shearing and/or forming steps are conducted using at least one lubricant.

8. The method according to any one of claims 1 through claim 5, wherein the shearing and/or forming steps are conducted using at least one plasticizer, and optionally wherein the plasticizer comprises a polar liquid, and further optionally the polar liquid comprises propylene carbonate or ethylene carbonate.

9. The method according to claim 7 or claim 8, further comprising: drying the article to remove the lubricant or plasticizer.

10. An article comprising:
filler particles; and
a binder system including fibrillated polyacrylonitrile (PAN) polymer particles comprising one or more of PAN, homopolymers of PAN, and copolymers of PAN;
wherein the filler particles are durably enmeshed within fibrils formed by the fibrillated PAN polymer particles.

11. The article of claim 10, wherein the article further comprises one or more of the further features:
- the filler particles comprise at least one of alumina particles, carbon particles, conductive carbon particles, activated carbon particles, zeolite, titanium dioxide (TiO₂), silica, silicon carbide, graphite particles, carbon black particles, silicon, sulfur, and lithium compound particles;
- the PAN polymer particles have a molecular weight of at least about 50,000 g/mol determined using inherent viscosity; or
- the article is self-supporting.

12. An electrode comprising:
filler particles; and
a binder system comprising fibrillated polyacrylonitrile (PAN) polymer particles comprising one or more of PAN, homopolymers of PAN, and copolymers of PAN;
wherein the filler particles are durably enmeshed within fibrils formed by the fibrillated PAN polymer particles.

13. The electrode of claim 12, wherein the electrode comprises one or more of the further features:
- the electrode comprises from 75 wt.% to 99 wt.% of the filler particles and from 1 wt.% to 25 wt.% of the PAN polymer particles;
wherein the filler particles comprise at least one of conductive carbon particles, graphite particles, silicon, and lithium compound particles;
wherein the lithium compound particles comprise lithium titanate, lithium metal, Lithium Cobalt Oxide (LiCoO₂), Lithium Iron Phosphate (LiFePO₄), Lithium Manganese Oxide (LiMn₂O₄), Lithium Nickel Manganese Cobalt Oxide (NMC), Lithium Nickel Cobalt Aluminum Oxide (NCA), or Lithium Sulfide (Li₂S);
- the electrode is self-supporting;
- the electrode is formed on a conductive foil; or
- the electrode has a fibrillation percentage greater than 0% as determined using Scanning Electron Microscopy (SEM).

14. The electrode of claim 12, further comprising up to 50 wt.% of a lubricant.

15. A method of making an electrode comprising:
providing polyacrylonitrile (PAN) polymer particles comprising one or more of PAN, homopolymers of PAN, and copolymers of PAN;
providing filler particles comprising at least one of conductive carbon particles, graphite particles, silicon, and lithium compound particles;
shearing the PAN polymer particles with the filler particles to produce a blended particle composition; and
forming the blended particle composition into a composite sheet at a temperature above a glass transition temperature and below a melt temperature of the PAN polymer particles;
wherein the filler particles are durably enmeshed in the fibrillated PAN polymer particles.

16. The method of claim 15, wherein the method comprises one or more of the further features:
- the PAN polymer particles have a molecular weight of at least about 50,000 g/mol determined using inherent viscosity;
- the composite sheet comprises from 50 wt.% to 99 wt.% of the filler particles and from 1 wt.% to 50 wt.% of the fibrillatable PAN polymer particles;
- wherein the composite sheet has a thickness from about 10 microns to about 500 microns;
- the article has a fibrillation percentage greater than 0% as determined using Scanning Electron Microscopy (SEM);
- applying the composite sheet to an electrically conductive substrate; or
- forming the blended particle composition into the composite sheet comprises one or more of applying pressure, calendering, extruding, applying heat, roll milling, or roll compacting.

17. Use of fibrillatable polyacrylontrile (PAN) polymer resin particles as a binder in making an electrode under solid state processing, the PAN polymer particles having a molecular weight of at least 50,000 g/mol determined using inherent viscosity and a crystallinity of at least 15% determined using an X-ray diffractometer.
